# FASCICULE DE BREVET EUROPEEN

(11) **EP 2 398 716 B1**
(45) Date de publication et mention de la délivrance du brevet: **19.12.2012**
(21) Numéro de dépôt: 10708235.6
(22) Date de dépôt: 15.02.2010
(51) Int. Cl.: B65D 41/32, B65D 41/62, B29C 45/14

(54) **CAPSULE DE BOUCHAGE OU SURBOUCHAGE A BANDE DECHIRABLE NON BLESSANTE ET SON PROCEDE DE FABRICATION**
KAPSEL- ODER ÜBERKAPSELVERSCHLUSS MIT VERLETZUNGSSICHER AUFREISSBAREM STREIFEN UND DEREN HERSTELLUNGSVERFAHREN
PRIMARY OR SECONDARY BOTTLE CAP WITH A TEARABLE INJURY-PROOF STRIP, AND METHOD FOR MAKING SAME

(30) Priorité: 18.02.2009 FR 0900739
(43) Date de publication de la demande: 28.12.2011
(73) Titulaire: Amcor Flexibles Capsules France, 92400 Courbevoie (FR)
(72) Inventeur: GRANGER, Jacques, F-33350 Sainte Terre (FR); LUCIANI, André, F-38470 Teche (FR); BOURREAU, Jean-Marie, F-24700 Le Pizou (FR)
(74) Mandataire: Fénot, Dominique
(86) Numéro de dépôt international: PCT/FR2010/000123
(87) Numéro de publication internationale: WO 2010/094853

(56) Documents cités:
- EP-A- 0 490 779
- CH-A- 355 737
- FR-A- 2 762 304
- US-A- 3 628 688

## Description

L'invention concerne une capsule en aluminium ou alliage d'aluminium dont la jupe, habituellement destinée à être sertie sur le goulot d'une bouteille ou récipient, est munie d'une bande déchirable permettant la séparation de la partie supérieure de la capsule, et elle concerne aussi le procédé d'obtention de cette capsule.

On connaît par la demande de brevet français FR 2 762 304 une capsule métallique selon le préambule de la revendication 1, destinée à boucher un récipient, ayant une tête et une jupe dont la paroi métallique, recouverte d'un manchon en matière plastique, est munie d'une zone de première ouverture. On connaît par la demande de brevet européen EP 0 490 779 une capsule ayant une tête et une jupe dont la paroi multicouche Al / (PE ou EAA) / Al (Al= alliage d'aluminium; PE= polyéthylène; EAA= copolymère éthylène acide acrylique) est réalisée en effectuant au moins une ligne de déchirement qui comprend une incision et des reliefs et creux extérieurs transversaux alternés.

On connaît par le brevet EP-B-0 039 298 une capsule de surbouchage ayant une tête et une jupe, dont le bord est destiné à être serti sur la bague du goulot d'une bouteille, cette jupe présentant une bande annulaire pré-découpée ayant, de part et d'autre d'une interruption, des extrémités conformées en deux languettes de préhension destinées à permettre la déchirure et l'enlèvement de la partie supérieure de la capsule par traction simultanée de ces languettes en sens contraire. Pour faciliter la préhension de ces languettes, celles-ci présentent des aspérités telles que des ondulations axiales obtenues par gaufrage ou moletage. De façon à simplifier la fabrication, ces aspérités sont réalisées sur toute la longueur de la bande avant le découpage de l'interruption dans la bande annulaire. Cette capsule, comme la plupart des capsules à bande déchirable, présente l'inconvénient, en particulier si la jupe est épaisse et en alliage d'aluminium écroui, de présenter des bords de découpe blessants, autant au niveau de la bande elle-même qu'à celui des portions de jupe qui ont été séparées par l'enlèvement de la bande.

Dans le brevet français FR 2 677 333, la demanderesse a proposé, pour diminuer le risque de blessure, une capsule de bouchage ayant une tête et une jupe comportant une bande déchirable circonférentielle, munie d'une languette de préhension et limitée par deux rainures circonférentielles continues extérieures qui constituent des lignes d'affaiblissement. Ladite bande déchirable circonférentielle présente des ondulations axiales qui affectent toute son épaisseur et qui s'étendent vers la partie haute et vers la partie basse de la jupe, au-delà desdites rainures circonférentielles. Avec de telles ondulations, qui s'étendent de part et d'autre des rainures, on obtient, après déchirure, une bande dont les bords ondulés sont peu blessants. De même, les bords de rupture des portions de la jupe qui résultent du déchirement ayant conduit à l'enlèvement de la bande sont ondulés et en général peu blessants. Cependant, le risque de blessure par les bords de rupture n'est pas encore suffisamment bas, compte tenu du nombre important de capsules de ce type qui sont distribuées dans le grand public, en particulier lorsque lesdites capsules sont en alliage d'aluminium écroui. Pour ces dernières, il arrive encore que la déchirure n'est pas encore parfaitement continue et linéaire et présente quelques amorces de lignes de rupture secondaires, formant des aspérités particulièrement agressives.

Or, il importe de veiller à ce que la probabilité de blessure lors de la première ouverture de ce type de bouteille très répandu soit la plus faible possible. La demanderesse a donc cherché à mettre au point une capsule de bouchage ou de surbouchage ayant une bande déchirable et pour laquelle, en particulier lorsqu'elle est en métal, typiquement en aluminium ou alliage d'aluminium écroui, le déchirement présente un risque de blessure minimal pour l'utilisateur.

Un premier objet selon l'invention est une capsule - de bouchage ou de surbouchage - ayant une tête et une jupe métallique comportant une bande déchirable circonférentielle limitée par deux lignes d'affaiblissement selon la revendication 1.

La demanderesse a en effet constaté que, pour diminuer efficacement le risque de création de bords de rupture blessants, les déchirures sont avantageusement guidées le long des lignes d'affaiblissement lorsque la dite couche en matière plastique couvre la majeure partie de la circonférence de la bande déchirable circonférentielle, qui, si elle adhère efficacement à ladite bande déchirable, en modifie le comportement mécanique d'ensemble. Ceci diminue substantiellement le risque de coupure lors de l'enlèvement de ladite bande déchirable circonférentielle.

Avantageusement, ladite couche en matière plastique est un revêtement extérieur qui couvre substantiellement la totalité de la circonférence de la bande déchirable circonférentielle. Avantageusement, cette couche est continue, c'est-à-dire, plus précisément, qu'elle couvre de façon continue ladite bande déchirable circonférentielle sur substantiellement la totalité de sa circonférence. Ceci présente l'avantage d'une part de diminuer le risque de détachement de portions de la couche ou du revêtement lors de la déchirure de ladite bande, d'autre part d'atténuer les à-coups et de permettre ainsi d'imposer un régime de contraintes stable au voisinage des zones successives où se produit la rupture, qui se propage circonférentiellement. La circonférence n'est pas forcément couverte sur la totalité de son étendue, par exemple en raison de la présence d'une fente ménagée pour faciliter une prise de doigt.

Quelle que soit la façon avec laquelle ledit revêtement extérieur en matière plastique a été déposé et adhère sur ladite bande déchirable circonférentielle, on constate que le risque de blessure pour l'utilisateur est très fortement diminué, en particulier lorsque la capsule est en alliage d'aluminium écroui. Le revêtement en matière plastique augmente l'épaisseur de la bande déchirable circonférentielle, ce qui d'une part éloigne les doigts de la zone de déchirure, située sur la tranche de ladite bande, d'autre part sert de support supplémentaire à la bande et permet d'assurer une meilleure continuité de la rupture, en guidant la déchirure le long des lignes d'affaiblissement et en empêchant la création d'amorces de rupture secondaire.

Ledit revêtement extérieur peut être un manchon en matière plastique qui adhère sur ladite bande déchirable circonférentielle par exemple par collage, en utilisant par exemple une matière adhésive adaptée au vernis qui recouvre généralement la jupe métallique de la capsule. La matière adhésive peut être par exemple un copolymère (éthylène, acide acrylique). On peut également effectuer un thermoscellage en suivant le procédé décrit par la demanderesse dans son brevet EP 1 009 674: on utilise une capsule recouverte d'un vernis - typiquement un vernis epoxy - qui est adapté à la mise en forme de la capsule par emboutissage-étirage et qui comprend une matière thermoplastique à l'état divisé, sous forme de particules typiquement microniques, avec une proportion pondérale de 5 à 30%. Ladite matière thermoplastique à l'état divisé dans le vernis peut par exemple être une polyoléfine, en particulier un polypropylène ou un polyéthylène, ou encore un élastomère thermoplastique. Le manchon, qui est en une matière thermoplastique compatible en fusion avec ladite matière plastique se trouvant à l'état divisé dans le vernis, est placé sur la paroi de la jupe de la capsule au niveau de la bande déchirable circonférentielle et on chauffe la zone de contact par exemple par induction.

Selon la présente invention, la bande déchirable circonférentielle est limitée par deux rainures circonférentielles, typiquement extérieures, qui constituent lesdites lignes d'affaiblissement On ne dépose le revêtement que sur une partie de la largeur de la bande déchirable circonférentielle, ladite jupe métallique présentant alors de préférence des ondulations transversales qui, comme dans FR 2 677 333, affectent toute son épaisseur et s'étendent de part et d'autre desdites rainures circonférentielles non recouvertes.

Dans une modalité préférée de l'invention, on réalise ledit revêtement extérieur par surmoulage d'une matière plastique sur la paroi extérieure de la bande déchirable circonférentielle et ancrage de la couche ainsi moulée par passage de la matière plastique au travers de perforations ménagées dans la jupe au niveau de ladite bande déchirable circonférentielle. Avantageusement, on ménage sur la paroi intérieure de la capsule, au niveau de la bande déchirable circonférentielle, une gorge annulaire interne destinée à recueillir la partie de la matière plastique injectée qui est passée par les perforations, de façon à former une couche d'ancrage continue. Etant donnée la faible épaisseur de la capsule, cette gorge annulaire interne peut être réalisée par conformation sur un poinçon de forme, de sorte que la mise en forme de la jupe laisse apparaître un bossage annulaire extérieur visible sur la capsule avant l'injection de ladite matière plastique.

Avantageusement, les perforations sont effectuées de telle sorte que les ponts qui relient la matière plastique recueillie dans ladite gorge annulaire interne et la matière plastique qui constitue ledit revêtement extérieur sont orientés substantiellement suivant la direction axiale. De préférence, les perforations sont régulièrement réparties sur la circonférence de la bande. L'ouverture de chaque perforation, - qui correspond à la section du pont en matière plastique reliant le revêtement à sa couche d'ancrage - et le pas angulaire séparant deux perforations voisines sont définis de telle sorte que ledit revêtement extérieur reste attaché à ladite bande lors de son enlèvement par déchirure des lignes d'affaiblissement.

Pour obtenir de telles capsules , on peut procéder de la manière suivante: on provisionne une capsule emboutie-étirée et on met en forme par moletage et à l'aide d'un mandrin adapté, typiquement au milieu de la bande déchirable circonférentielle, un bossage annulaire qui est en léger relief vers l'extérieur et présente de facto une gorge annulaire interne qui permet de recueillir une partie de la matière plastique passant par les perforations. Ledit bossage présente typiquement une section "en créneau", avec une paroi périphérique cylindrique et des parois latérales. Les perforations peuvent être réalisées par moletage au niveau desdites parois latérales au moment de la formation dudit créneau ou au cours d'une déformation ultérieure de ladite paroi périphérique.

Par exemple, on peut concevoir un mandrin et une molette dont les formes coopèrent pour réaliser simultanément les parois latérales et les perforations. Dans une opération appelée communément "moulurage", on place la capsule sur un mandrin dont le diamètre est sensiblement inférieur au diamètre interne de la jupe de la capsule et on applique une molette sur la partie de la capsule qui est au contact du mandrin, en imposant un effort radial en direction du mandrin. La molette et le mandrin tournent de façon coordonnée de sorte que la circonférence de la paroi de la capsule est progressivement mise en forme sous l'effet de l'action conjointe de la molette et du mandrin. Si la molette présente au niveau de sa partie active une zone concave, coïncidant avec un bourrelet en relief sur le mandrin, on peut obtenir le bossage annulaire "en créneau" tel que celui évoqué précédemment

La molette peut présenter également des excroissances susceptibles d"'enfoncer" la paroi de la capsule si, à ce niveau, le mandrin présente une cavité. En appliquant une molette qui présente ce type de dents ou excroissances aux bords d'une zone concave et en la faisant travailler au regard d'un bourrelet en relief sur le mandrin, on crée non seulement un bourrelet annulaire avec une section en forme de créneau mais on impose également une grande déformation à la jupe de la capsule au niveau des extrémités des dents de la molette, d'une amplitude telle qu'il peut y avoir une rupture locale qui crée une perforation à la base du créneau. Autrement dit, avec une hauteur radiale des dents de la molette suffisante, on peut créer une scission locale σ_{rz} dont l'intensité est favorable à l'apparition de perforations dont l'ouverture s'étend essentiellement dans un plan transversal, de sorte que, après injection-surmoulage, les ponts de matière plastique résultant de l'écoulement de la matière plastique à travers ces orifices, sont orientés substantiellement dans la direction axiale. On trouvera dans les exemples plusieurs modalités où la jupe de la capsule est déformée et perforée en utilisant ce procédé de moulurage.

Comme dans le mode de réalisation où la couche en matière plastique est un manchon collé sur la paroi de la jupe de la capsule, la bande déchirable circonférentielle recouverte d'une couche en matière plastique surmoulée et ancrée peut être limitée par deux rainures circonférentielles, typiquement extérieures, qui constituent lesdites lignes d'affaiblissement. Mais on peut également, comme le montrent les deux derniers exemples présentés ci-après, réaliser les lignes d'affaiblissement par moulurage, typiquement en concomitance avec la réalisation du bossage annulaire et des perforations destinées aux ponts d'ancrage. Dans ce cas, il est recommandé que le revêtement recouvre les perforations des lignes d'affaiblissement, de façon à ce que les doigts soient à l'abri des bords de rupture.

Dans une modalité avantageuse de l'invention, illustrée par le dernier exemple exposé ci-après, les lignes d'affaiblissement sont constituées par les perforations qui sont ménagées pour permettre l'ancrage du revêtement extérieur. Typiquement, les perforations sont ménagées sur la jupe métallique de la capsule de telle sorte qu'elles sont alignées circonférentiellement, séparées les unes des autres par des ponts métalliques de faible section. Lorsqu'on a réalisé un bossage annulaire central pour ménager une gorge annulaire apte à recueillir la couche d'ancrage, les alignements circonférentiels des perforations qui permettent le passage de la matière plastique vers la gorge annulaire peuvent constituer, comme dans l'exemple 4 ci-après, lesdites lignes de faiblesse.

Les capsules plus particulièrement concernées par l'invention sont des capsules de bouchage en aluminium ou alliage d'aluminium écroui, typiquement un alliage 3105 ou 8011, recouvertes extérieurement d'un vernis en epoxy. Toute matière plastique peut convenir pour le revêtement de la bande déchirable circonférentielle, si ce dernier est fixé sur la jupe par collage. Il suffit de trouver une matière adhésive adaptée au vernis qui recouvre la jupe métallique. De préférence, on choisira une matière plastique élastomérique agréable au toucher. Pour ce qui concerne les revêtements surmoulés et ancrés, une matière thermoplastique, telle qu'une polyoléfine ou un élastomère thermoplastique, de type SEBS (copolymère styrène-éthylène-butylène-styrène) peut convenir.

Les capsules concernées par l'invention ont en général un diamètre compris entre 15 et 50 mm. Elles ont une jupe d'épaisseur comprise entre 0,15 mm et 0,30 mm, typiquement entre 0,20 mm et 0,25 mm, par exemple 210 µm pour des diamètres inférieurs à 30 mm et 230 µm pour des diamètres supérieurs à 30 mm. La bande déchirable circonférentielle a une largeur généralement comprise entre 4 et 10 mm. De préférence, la couche en matière plastique qui, selon l'invention, recouvre ladite bande déchirable circonférentielle, a une épaisseur globale moyenne supérieure à 0,30 mm, typiquement voisine de 1 mm. On entend par épaisseur globale l'épaisseur du manchon collé sur la jupe ou la somme des épaisseurs du revêtement extérieur et de la couche d'ancrage interne surmoulés par injection. Bien évidemment, l'influence bénéfique de la couche en matière plastique varie en fonction de son épaisseur et du comportement mécanique du matériau plastique utilisé. Mais, de manière générale, on constate qu'en-dessous de 0,3 mm, la couche en matière plastique est trop mince pour modifier significativement le comportement mécanique d'ensemble de la bande déchirable circonférentielle, ce qui ne permet pas de diminuer de façon sensible le risque de coupure lors de l'enlèvement de ladite bande déchirable circonférentielle.

L'invention peut également concerner des capsules métalliques plus minces telles que des capsules de surbouchage qui ont une épaisseur comprise en général entre 0,06 mm et 0,18 mm, typiquement entre 0,075 et 0,15 mm et qui sont en aluminium ou alliage d'aluminium, typiquement du 1050, 1100 ou 1200 (désignations normalisées de l'Aluminium Association) ou encore en étain ou un de ses alliages, en particulier un alliage ternaire étain- bismuth- antimoine.

Avantageusement, la bande déchirable circonférentielle est munie d'une languette de préhension. A cette fin, la jupe munie de sa bande déchirable circonférentielle, typiquement recouverte de ladite couche en matière plastique, est découpée localement de façon à obtenir une fente dont la forme présente au moins une partie sensiblement axiale traversant la largeur de la bande et au moins une partie orientée en direction de l'une des lignes de faiblesse. L'extrémité de la bande encadrée par cette fente peut alors servit de languette de préhension

Avantageusement, la languette de préhension est recouverte par ladite couche en matière plastique. De préférence, la découpe de la fente est réalisée après la pose de la couche en matière plastique. De préférence également, la couche en matière plastique présente une épaisseur plus importante au niveau de la languette de préhension, afin d'améliorer la prise de doigt.

L'invention a aussi pour objet un procédé de fabrication d'une capsule munie d'une bande déchirable circonférentielle selon l'invention, dans lequel:
a) on prépare une ébauche de capsule en aluminium ou alliage écroui;
b) on emmanche la capsule sur un mandrin cylindrique, dont le relief est localement complémentaire de celui de la molette appliquée à l'étape suivante c)
c) par application d'une molette sur la jupe de ladite capsule, en exerçant un effort sensiblement radial en direction dudit mandrin, on réalise un bossage annulaire et, régulièrement réparties sur la circonférence de la jupe, des perforations dont l'ouverture s'étend substantiellement dans un plan transversal; optionnellement, on réalise, de part et d'autre dudit bossage annulaire, des perforations régulièrement réparties sur la circonférence de la jupe en vue de constituer les lignes de faiblesse de ladite bande déchirable circonférentielle;
d) on emmanche la capsule sur un mandrin de moulage dont le diamètre est sensiblement égal au diamètre interne de la capsule;
e) on applique ensuite sur la paroi extérieure de jupe de la capsule un moule externe dont l'empreinte présente une cavité annulaire au droit dudit bossage annulaire;
f) on injecte la matière plastique, typiquement une polyoléfine ou un élastomère thermoplastique, dans la cavité du moule qui est constituée par la réunion de la surface du mandrin et de l'empreinte annulaire du moule externe et qui est traversée par la jupe de capsule munie desdites perforations;
g) on enlève le moule externe et le mandrin de moulage.

Si les lignes de faiblesses n'ont pas été réalisées à l'étape c), le procédé est complété par l'étape suivante:
h) on emmanche la capsule sur un mandrin dont la surface cylindrique est lisse et, au voisinage des bords inférieur et supérieur du revêtement plastique ainsi surmoulé et ancré, typiquement à 0,5 mm de ceux-ci, on réalise deux lignes de faiblesse circonférentielles par indentation d'une molette au profil adapté, comportant typiquement une extrémité d'appui de largeur comprise entre 0,05 et 0,1 mm, ladite extrémité étant comprise entre deux portions chanfreinées faisant avec elles en section droite un V tronqué dont d'angle de pointe est compris entre 60 et 120°C;

Enfin, pour obtenir la languette de préhension, on réalise sur la jupe, typiquement par poinçonnage, une fente dont la forme présente au moins une partie sensiblement axiale traversant la largeur de la bande et au moins une partie orientée en direction de l'une des lignes de faiblesse.

La figure 1 illustre une capsule de bouchage à bande détachable selon l'invention.
La figure 2 illustre, en coupe diamétrale, la partie de la jupe de la capsule de la figure 1 située au niveau de la bande déchirable circonférentielle.
La figure 3 illustre, en demi-coupe diamétrale à droite, la capsule de la figure 1 avant la réalisation des ondulations de part et d'autre des rainures.
Les figures 4, 6 et 7 illustrent trois capsules moulurées avant injection de la matière plastique, à partir desquelles des capsules de surbouchage à bande déchirable circonférentielle selon l'invention peuvent être réalisées. Le détail de la partie moulurée de la bande déchirable circonférentielle est présenté en perspective aux figures 4a, 6a et 7a. Les sections par deux plans radiaux passant respectivement par le sommet et par le creux de chaque ondulation sont représentées sur les figures 4b, 6b et 7b.
La figure 5 illustre une capsule de surbouchage à bande déchirable circonférentielle selon l'invention, après incision de la fente délimitant la languette de préhension.

### MODES DE REALISATION

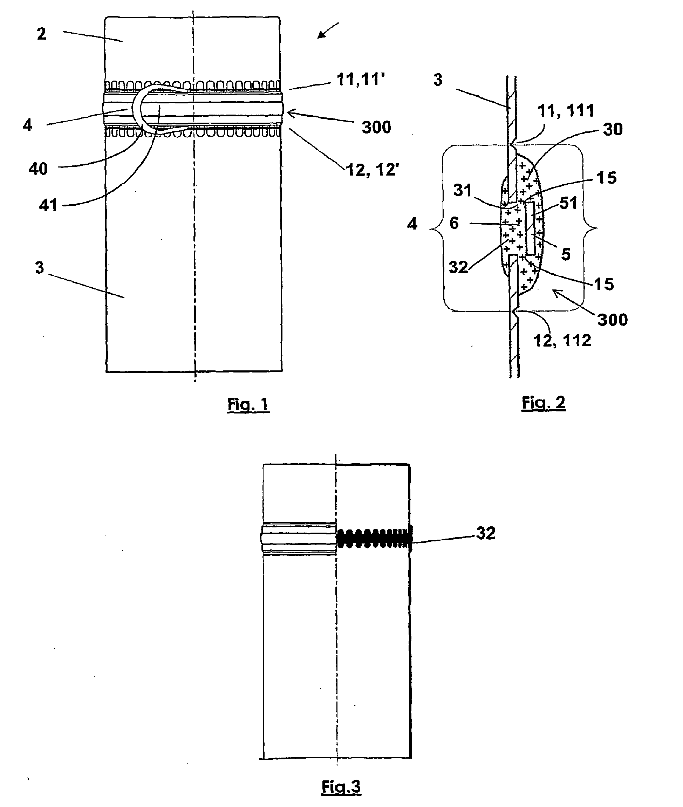

### EXEMPLE 1 (FIG.1 A 3)

Un premier mode de réalisation de capsule selon l'invention est illustré aux figures 1 à 3. La capsule (1) présente une tête (2) et une jupe métallique (3) comportant une bande déchirable circonférentielle (4) limitée par deux lignes d'affaiblissement (11 et 12). La bande déchirable circonférentielle (4) est recouverte par une couche (300) en matière plastique, qui reste solidaire de ladite bande déchirable circonférentielle lors de son enlèvement par déchirure desdites lignes d'affaiblissement. La couche (300) en matière plastique est continue: elle comprend un revêtement extérieur (30) qui couvre la totalité de la circonférence de la bande déchirable circonférentielle (4) et qui est retenu par une couche interne de matière plastique (32) .

Le revêtement en matière plastique augmente l'épaisseur de la bande déchirable circonférentielle, ce qui d'une part éloigne les doigts de la zone de déchirure, située sur la tranche de ladite bande, et d'autre part, en confortant le comportement mécanique de la bande déchirable circonférentielle, permet d'assurer une meilleure continuité de la rupture, en guidant la déchirure le long des lignes d'affaiblissement et en empêchant la création d'amorces de rupture secondaire.

Ledit revêtement extérieur a été réalisé par surmoulage de polypropylène sur la paroi extérieure de la bande déchirable circonférentielle (4) et ancrage de la couche ainsi moulée par passage de la matière plastique au travers de perforations (15) ménagées dans la jupe (3) au niveau de ladite bande déchirable circonférentielle. On a réalisé sur la paroi intérieure de la capsule, au niveau de la bande déchirable circonférentielle, une gorge annulaire (6) interne destinée à recueillir la partie de la matière plastique injectée qui est passée par les perforations, de façon à former une couche d'ancrage (32) continue. Cette gorge annulaire (6) interne a été réalisée par conformation sur un poinçon de forme, de sorte que la mise en forme de la jupe laisse apparaître un bossage annulaire extérieur (5) visible sur la capsule avant l'injection de ladite matière plastique.

Les perforations sont effectuées de telle sorte que les ponts d'ancrage (31) qui relient la matière plastique recueillie dans ladite gorge annulaire (6) interne et la matière plastique qui constitue ledit revêtement extérieur (30) sont orientés substantiellement suivant la direction axiale. 40 perforations (15) sont régulièrement réparties sur la circonférence de la bande déchirable circonférentielle (4). La surface d'ouverture de chaque perforation est typiquement de 0,1 mm².

Le bossage (5) présente une section "en créneau", avec une paroi périphérique cylindrique (51) et des parois latérales de faible hauteur radiale, ladite hauteur radiale étant typiquement de l'ordre de deux fois l'épaisseur de la jupe. Les perforations ont été réalisées par moulurage au niveau desdites parois latérales lors de la mise en forme dudit bossage annulaire.

La capsule est une capsule de bouchage en alliage d'aluminium écroui, recouverte extérieurement d'un vernis en epoxy. Sa jupe a un diamètre de 33 mm et une épaisseur de 0,23 mm. La bande déchirable circonférentielle a une largeur de 8 mm. La couche en matière plastique qui recouvre ladite bande déchirable circonférentielle, a une épaisseur globale moyenne 1,0 mm.

La bande déchirable circonférentielle est munie d'une languette de préhension (41): après surmoulage de la couche plastique, la jupe a été découpée localement de façon à obtenir une fente (40) qui encadre la languette de préhension.

La bande déchirable circonférentielle (4) est limitée par deux rainures circonférentielles (111 et 112) extérieures, qui constituent lesdites lignes d'affaiblissement (11 et 12). Le revêtement extérieur (30) ne couvre qu'une partie de la largeur de la bande déchirable circonférentielle (4). De façon à diminuer le risque de blessure, on a réalisé, par moulurage sur ladite jupe métallique, des ondulations transversales (20) qui affectent toute l'épaisseur de la jupe (3) et qui s'étendent de part et d'autre desdites rainures circonférentielles (111 et 112) non recouvertes.

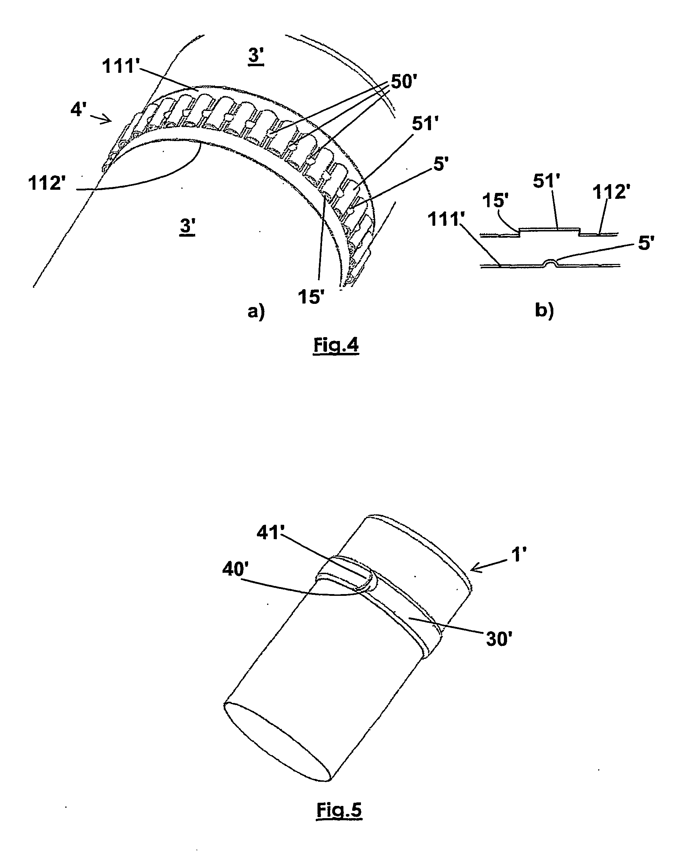

### EXEMPLE 2 (FIG. 4a, 4b et Fig.5)

Selon un deuxième mode de réalisation, on déforme la jupe (3') de la capsule comme illustré sur les figures 4a et 4b pour permettre l'ancrage d'une couche en matière plastique surmoulée. Après dépôt du revêtement extérieur (30') en matière plastique, la capsule (1') prend l'aspect illustré en figure 5.

La jupe métallique (3') comporte une bande déchirable circonférentielle (4') délimitée par deux rainures annulaires (111' et 112'), qui constituent lesdites lignes d'affaiblissement. Au milieu de cette bande déchirable, on a formé par moulurage un série d'ondulations (51') en relief, de forme globalement hémicylindrique et aux extrémités desquelles se trouvent les perforations (15'). Les ondulations (51') sont reliées entre elles par les portions (50') d'un bossage annulaire (5') à section sensiblement hémicirculaire.

On dépose par surmoulage une couche de matière plastique qui recouvre extérieurement la bande déchirable, rainures annulaires (111' et 112') comprises. En passant par les perforations (15'), la matière plastique s'écoule pour remplir l'intérieur des ondulations (51') reliées entre elles par les portions (50') du bossage annulaire (5'). On obtient ainsi une couche d'ancrage annulaire continue. Après démoulage, on réalise la fente (40') qui permet de délimiter une languette de préhension (41').

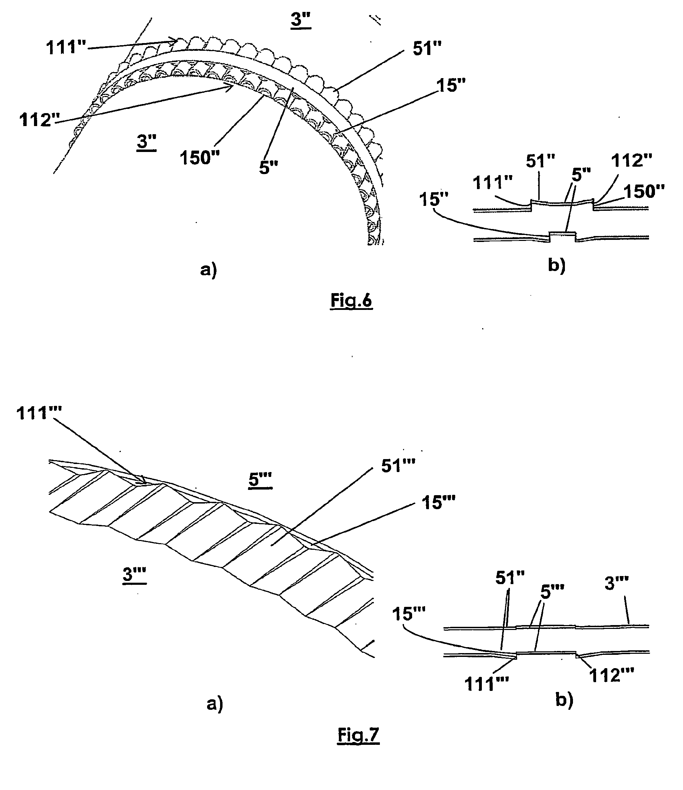

### EXEMPLE 3 (FIG.6a, 6b)

Selon un troisième mode de réalisation, on déforme la jupe (3") de la capsule comme illustré sur les figures 6a et 6b, d'une part pour réaliser les lignes de faiblesse et d'autre part pour assurer l'ancrage de la couche plastique. On a formé par moulurage la bande déchirable circonférentielle en créant un bossage annulaire central (5") et une série d'ondulations (51") en relief, en forme de tuile romaine et qui s'enfoncent radialement lorsqu'elles s'approchent dudit bossage central annulaire (5"). Aux extrémités desdites ondulations (51") qui sont les plus éloignées dudit bossage annulaire central (5"), on a formé des perforations d'extrémité (150") dont l'alignement circonférentiel constitue une ligne d'affaiblissement (111", 112"). Aux extrémités desdites ondulations (51") qui sont les plus proches dudit bossage annulaire central (5"), on a formé des perforations (15") destinées à la formation des ponts d'ancrage.

On dépose ensuite par surmoulage une couche de matière plastique qui recouvre extérieurement la bande déchirable, lignes de faiblesse (111" et 112") comprises. En passant par les perforations (15"), la matière plastique s'écoule intérieurement en remplissant l'intérieur du bossage (5") et rejoint la matière plastique qui est passée par les perforations d'extrémité (150"). On obtient ainsi une couche d'ancrage annulaire continue. Après démoulage puis réalisation de la fente qui permet de délimiter une languette de préhension, la capsule prend l'aspect illustré en figure 5.

### EXEMPLE 4 (FIG.7a, 7b)

Dans ce quatrième mode de réalisation, les lignes d'affaiblissement (111"' et 112"') sont constituée par les perforations (15"') qui sont ménagées de part et d'autre de la paroi latérale cylindrique du bossage annulaire central (5'") pour permettre le passage de la matière plastique vers la gorge annulaireet créer ainsi la couche d'ancrage du revêtement extérieur. Comme dans l'exemple précédent, on déforme la jupe (3"') de la capsule comme illustré sur les figures 7a et 7b, pour réaliser les lignes de faiblesse et assurer l'ancrage de la couche plastique. On forme par moulurage la bande déchirable circonférentielle en créant un bossage annulaire central (5'") et une série d'ondulations (51"') en forme de tuile romaine et qui s'enfoncent radialement lorsqu'elles s'approchent dudit bossage central annulaire (5'"). Aux extrémités desdites ondulations (51'") qui sont les plus éloignées dudit bossage annulaire central (5'"), la jupe n'est pas déformée ou peu déformée (cas illustré en figure 7a). Aux extrémités desdites ondulations (51"') qui sont les plus proches dudit bossage annulaire central (5'"), on a formé des perforations (15'") destinées à la fois à la formation des ponts d'ancrage et à celle des lignes d'affaiblissement (111"' et 112'").

La forme de la molette est telle qu'après son passage sur la jupe en appui sur un poinçon central, la jupe est cisaillée dans son épaisseur, incomplètement au niveau du sommet des ondulations (l'épaisseur résiduelle est typiquement de l'ordre de la moité ou des deux tiers de l'épaisseur initiale), et complètement au niveau des creux desdites ondulations, jusqu'à rupture et enfoncement sur une profondeur voisine de la valeur de l'épaisseur. De la sorte, la paroi périphérique cylindrique du bossage annulaire central (5"') n'est rattachée au reste de la jupe (3'") que par des ponts métalliques de faible section.

Lors de la déchirure des lignes d'affaiblissement (111'" et 112"'), ce sont ces ponts métalliques de faible section qui sont cisaillés, alors que les ponts en matière plastique, non soumis au cisaillement, ne rompent pas et permettent ainsi de maintenir le revêtement solidaire de la bande déchirée.

## Revendications

1. Capsule (1) ayant une tête (2) et une jupe métallique (3) comportant une bande déchirable circonférentielle (4) limitée par deux lignes d'affaiblissement (11 et 12), et recouverte par une couche (300) en matière plastique, qui reste solidaire de ladite bande déchirable circonférentielle lors de son enlèvement par déchirure desdites lignes d'affaiblissement, dans laquelle la dite bande déchirable circonférentielle (4) est limitée par deux rainures circonférentielles (111 et 112; 111' et 112'), typiquement extérieures, qui constituent lesdites lignes d'affaiblissement (11 et 12), **caractérisée en ce que** ledit revêtement ne couvre qu'une partie de la largeur de ladite bande déchirable circonférentielle, ladite jupe métallique présentant des ondulations transversales qui affectent toute son épaisseur et qui s'étendent de part et d'autre desdites rainures circonférentielles non recouvertes.

2. Capsule (1) selon la revendication 1 **caractérisée en ce que** la dite couche en matière plastique est un revêtement extérieur (30) en matière plastique, qui couvre substantiellement la totalité de la circonférence de ladite bande déchirable circonférentielle (4).

3. Capsule (1) selon la revendication 1 ou 2 dans laquelle ladite couche en matière plastique couvre de façon continue ladite bande déchirable circonférentielle sur substantiellement la totalité de sa circonférence.

4. Capsule(1) selon l'une quelconque des revendications 1 à 3 dans laquelle ladite couche en matière plastique (300) est un manchon en matière plastique qui adhère sur ladite bande déchirable circonférentielle (4).

5. Capsule (1) selon l'une quelconque des revendications 1 à 4 dans laquelle ladite couche en matière plastique (300) est un revêtement extérieur (30) obtenu par surmoulage d'une matière plastique sur la paroi extérieure de la jupe métallique (3) et ancrage de la couche ainsi moulée par passage de ladite matière plastique au travers de perforations (15) ménagées dans ladite jupe métallique au niveau de ladite bande déchirable circonférentielle (4).

6. Capsule (1) selon la revendication 5 dans laquelle la paroi intérieure de ladite capsule présente, au niveau de ladite bande déchirable circonférentielle, une gorge annulaire interne (6) destinée à recueillir la partie de la matière plastique injectée qui est passée par lesdites perforations (15), de façon à former une couche d'ancrage (32) continue.

7. Capsule (1) selon la revendication 5 ou 6 dans laquelle lesdites perforations (15) sont effectuées de telle sorte que les ponts d'ancrage (31) qui relient la matière plastique recueillie dans ladite gorge annulaire (6) interne et la matière plastique qui constitue ledit revêtement extérieur (30) sont orientés substantiellement suivant la direction axiale.

8. Capsule (1) selon l'une quelconque des revendications 5 à 7 dans laquelle lesdites lignes d'affaiblissement (111"' et 112'") sont constituées par les perforations (15'") qui sont ménagées pour permettre ledit ancrage du revêtement extérieur.

9. Capsule (1) selon l'une quelconque des revendications 1 à 8 dans laquelle ladite jupe métallique a une épaisseur comprise entre 0,15 mm et 0,30 mm, de préférence entre 0,20 mm et 0,25 mm, ladite bande déchirable circonférentielle a une largeur comprise entre 4 et 10 mm et dans laquelle ladite couche en matière plastique, sous forme de manchon ou de revêtement extérieur (30) solidaire d'une couche d'ancrage (32) interne a une épaisseur globale moyenne supérieure à 0,30 mm.

10. Capsule (1) selon l'une quelconque des revendications 1 à 9 dans laquelle ladite bande déchirable circonférentielle est munie d'une languette de préhension (40).

11. Capsule (1) selon la revendication 10 dans laquelle ladite languette de préhension (40) est également couverte par ledit revêtement extérieur (30) en matière plastique.

12. Procédé procédé de fabrication d'une capsule (1, 1') munie d'une bande déchirable circonférentielle (4, 4'), dans lequel:
a) on prépare une ébauche de capsule en aluminium ou alliage écroui;
b) on emmanche la capsule sur un mandrin cylindrique, dont le relief est localement complémentaire de celui de la molette appliquée à l'étape suivante c)
c) par application d'une molette sur la jupe de ladite capsule, en exerçant un effort sensiblement radial en direction dudit mandrin, on réalise un bossage annulaire et, régulièrement réparties sur la circonférence de la jupe, des perforations dont l'ouverture s'étend substantiellement dans un plan transversal;
d) on emmanche la capsule sur un mandrin de moulage dont le diamètre est sensiblement égal au diamètre interne de la capsule;
e) on applique ensuite sur la paroi extérieure de jupe de la capsule un moule externe dont l'empreinte présente une cavité annulaire au droit dudit bossage annulaire;
f) on injecte la matière plastique, typiquement une polyoléfine ou un élastomère thermoplastique, dans la cavité du moule qui est constituée par la réunion de la surface du mandrin et de l'empreinte annulaire du moule externe et qui est traversée par la jupe de capsule munie desdites perforations;
g) on enlève le moule externe et le mandrin de moulage;
la réalisation des lignes de faiblesse qui délimitent ladite bande déchirable circonférentielle étant effectuée soit au cours de l'étape c) soit après l'étape g), par indentation d'une molette au profil adapté.

13. Procédé de fabrication selon la revendication 12 complété par l'étape finale suivante: on réalise sur la jupe, typiquement par poinçonnage, une fente dont la forme présente au moins une partie sensiblement axiale traversant la largeur de la bande et au moins une partie orientée en direction de l'une des lignes de faiblesse.

## Claims

1. A cap (1) having a head (2) and a metal skirt (3) including a tearable circumferential strip (4) delimited by weakened lines (11 and 12) and covered by a layer (300) of plastic material, which remains integral with the said tearable circumferential strip on its removal by tearing of the said weakened lines, in which the said tearable circumferential strip (4) is delimited by two circumferential grooves (111 and 112; 111' and 112'), typically exterior, which constitute the said weakened lines (11 and 12), **characterized in that** the said covering only covers a portion of the width of the said tearable circumferential strip, the said metal skirt having transverse undulations which affect its entire thickness and which extend on either side of the said non-covered circumferential grooves.

2. The cap (1) according to Claim 1, **characterized in that** the said layer of plastic material is an exterior covering (30) of plastic material, which covers substantially the entirety of the circumference of the said tearable circumferential strip (4).

3. The cap (3) according to Claim 1 or 2, in which the said layer of plastic material covers the said tearable circumferential strip in a continuous manner over substantially the entirety of its circumference.

4. The cap (1) according to any one of Claims 1 to 3 in which the said layer of plastic material (300) is a sleeve of plastic material which adheres to the said tearable circumferential strip (4).

5. The cap (1) according to any one of Claims 1 to 4, in which the said layer of plastic material (300) is an
exterior covering (30) obtained by overmoulding of a plastic material on the exterior wall of the metal skirt (3) and anchoring of the layer thus moulded by passage of the said plastic material through perforations (15) arranged in the said metal skirt at the level of the said tearable circumferential strip (4) .

6. The cap (1) according to Claim 5, in which the interior wall of the said cap has, at the level of the said tearable circumferential strip, an internal annular groove (6) intended to receive the portion of the injected plastic material which is passed through the said perforations (15), so as to form a continuous anchoring layer (32).

7. The cap (1) according to Claim 5 or 6, in which the said perforations (15) are made such that the anchoring bridges (31) which connect the plastic material received in the said internal annual groove (6) and the plastic material which constitutes the said exterior covering (30) are oriented substantially along the axial direction.

8. The cap (1) according to any one of Claims 5 to 7, in which the said weakened lines (111''' and 112''') are constituted by the perforations (15''') which are arranged to permit the said anchoring of the exterior covering.

9. The cap (1) according to any one of Claims 1 to 8, in which the said metal skirt has a thickness comprised between 0.15 mm and 0.30 mm, preferably between 0.20 mm and 0.25 mm, the said tearable circumferential strip has a width comprised between 4 and 10 mm and in which the said layer of plastic material, in the form of a sleeve or exterior covering (30) integral with an internal anchoring layer (32) has an overall average thickness greater than 0.30 mm.

10. The cap (1) according to any one of Claims 1 to 9, in which the said tearable circumferential strip is provided with a grip tab (40).

11. The cap (1) according to Claim 10, in which the said grip tab (40) is also covered by the said exterior covering (30) of plastic material.

12. A method for the manufacture of a cap (1, 1') provided with a tearable circumferential strip (4, 4'), in which:
a) a blank cap made of aluminium or cold-worked alloy is prepared;
b) the cap is fitted on a cylindrical mandrel, the relief of which is locally complementary to that of the roller which will be applied in the following step c)
c) by application of a roller on the skirt of the said cap, by exerting a substantially radial force in the direction of the said mandrel, an annular boss is produced and, regularly distributed over the circumference of the skirt, perforations, the openings of which extends substantially in a transverse plane;
d) the cap is fitted onto a moulding mandrel, the diameter of which is substantially equal to the internal diameter of the cap;
e) an external mould is then applied on the exterior wall of the skirt of the cap, the imprint of which external mould presents an annular cavity in line with the said annular boss;
f) the plastic material, typically a polyolefin or a thermoplastic elastomer, is injected into the cavity of the mould, which is constituted by the joining of the surface of the mandrel and of the annular imprint of the external mould and which is crossed by the skirt of the cap provided with the said perforations;
g) the external mould and the moulding mandrel are removed;
the realization of the weakened lines which delimit the said tearable circumferential strip being carried out either during step c) or after step g) by indentation of a roller with a suitable profile.

13. Manufacturing method according to Claim 12, completed by the following final step: a slot is formed on the skirt, typically by punching, the shape of which slot has at least a substantially axial portion crossing the width of the strip and at least a portion oriented in the direction of one of the weakened lines.

## Patentansprüche

1. Kapsel (1), umfassend einen Kopf (2) und eine Metallschürze (3), umfassend ein zerreißbares Umfangsband (4), das von zwei Schwächungslinien (11 und 12) begrenzt und von einer Schicht (300) aus Kunststoff bedeckt ist, die mit dem zerreißbaren Umfangsband während seiner Entfernung durch Zerreißen der Schwächungslinien verbunden bleibt, wobei das zerreißbare Umfangsband (4) von zwei Umfangsrillen (111 und 112; 111' und 112'), die typischerweise außen vorgesehen sind, begrenzt sind, die die Schwächungslinien (11 und 12) bilden, **dadurch gekennzeichnet, dass** die Verkleidung nur einen Teil der Breite des zerreißbaren Umfangsbandes abdeckt, wobei die Metallschürze Querwellungen aufweist, die ihre gesamte Dicke betreffen und sich beiderseits der nicht abgedeckten Umfangsrillen erstrecken.

2. Kapsel (1) nach Anspruch 1, **dadurch gekennzeichnet, dass** die Kunststoffschicht eine Außenverkleidung (30) aus Kunststoff ist, die im Wesentlichen die Gesamtheit des Umfangs des zerreißbaren Umfangsbandes (4) abdeckt.

3. Kapsel (1) nach Anspruch 1 oder 2, bei der die Kunststoffschicht durchgehend das zerreißbare Umfangsband auf im Wesentlichen der Gesamtheit seines Umfangs abdeckt.

4. Kapsel (1) nach einem der Ansprüche 1 bis 3, bei der die Kunststoffschicht (300) eine Hülse aus Kunststoff ist, die an dem zerreißbaren Umfangsband (4) anhaftet.

5. Kapsel (1) nach einem der Ansprüche 1 bis 4, bei der die Kunststoffschicht (300) eine Außenverkleidung (30) ist, die durch Aufformen eines Kunststoffes auf die
Außenwand der Metallschürze (3) und Befestigung der so geformten Schicht durch Durchführen des Kunststoffes durch Öffnungen (15), die in der Metallschürze im Bereich des zerreißbaren Umfangsbandes (4) vorgesehen sind, erhalten wird.

6. Kapsel (1) nach Anspruch 5, bei der die Innenwand der Kapsel im Bereich des zerreißbaren Umfangsbandes eine ringförmige Innennut (6) aufweist, die dazu bestimmt ist, den Teil des eingespritzten Kunststoffes, der durch die Öffnungen (15) durchgeführt wird, zu sammeln, um eine durchgehende Befestigungsschicht (32) zu bilden.

7. Kapsel (1) nach Anspruch 5 oder 6, bei der die Öffnungen (15) derart ausgeführt sind, dass die Befestigungsbrücken (31), die den in der ringförmigen Innennut (6) gesammelten Kunststoff und den Kunststoff, der die Außenverkleidung (30) bildet, verbinden, im Wesentlichen in Axialrichtung ausgerichtet sind.

8. Kapsel (1) nach einem der Ansprüche 5 bis 7, bei der die Schwächungslinien (111''' und 112''') von den Öffnungen (15''') gebildet sind, die vorgesehen sind, um die Befestigung der Außenverkleidung zu ermöglichen.

9. Kapsel (1) nach einem der Ansprüche 1 bis 8, bei der die Metallschürze eine dicke zwischen 0,15 mm und 0,30 mm, vorzugsweise zwischen 0,20 mm und 0,25 mm, aufweist, wobei das zerreißbare Umfangsband eine Breite zwischen 4 und 10 mm besitzt, und bei der die Kunststoffschicht in Form einer Hülse oder einer Außenverkleidung (30), die mit einer inneren Befestigungsschicht (32) verbunden ist, eine durchschnittliche Gesamtdicke von mehr als 0,30 mm aufweist.

10. Kapsel (1) nach einem der Ansprüche 1 bis 9, bei der das zerreißbare Umfangsband mit einer Greiflasche (40) versehen ist.

11. Kapsel (1) nach Anspruch 10, bei der die Greiflasche (40) ebenfalls mit der Außenverkleidung (30) aus Kunststoff bedeckt ist.

12. Verfahren zur Herstellung einer Kapsel (1, 1'), die mit einem zerreißbaren Umfangsband (4, 4') versehen ist, bei dem:
a) eine Kapselvorform aus Aluminium oder einer hart gezogenen Legierung hergestellt wird;
b) die Kapsel auf einen zylindrischen Dorn gesteckt wird, dessen Relief lokal zu jenem der in Schritt c) angelegten Walze komplementär ist;
c) durch Anlegen einer Walze auf die Schürze der Kapsel durch Ausüben einer im Wesentlichen radialen Kraft in Richtung des Dorns ein ringförmiger Wulst und, regelmäßig am Umfang der Schürze verteilt, Öffnungen hergestellt werden, deren Ausgang sich im Wesentlichen in einer Querebene erstreckt;
d) die Kapsel auf einen Formungsdorn gesteckt wird, dessen Durchmesser im Wesentlichen gleich dem Innendurchmesser der Kapsel ist;
e) dann auf die Außenwand der Schürze der Kapsel eine äußere Form angelegt wird, deren Abdruck einen ringförmigen Hohlraum im rechten Winkel zum ringförmigen Wulst aufweist;
f) der Kunststoff, typischerweise ein Polyolefin oder ein thermoplastisches Elastomer, in den Hohlraum der Form eingespritzt wird, der durch die Vereinigung der Oberfläche des Dorns und des ringförmigen Abdrucks der äußeren Form gebildet ist und durch den die mit den Öffnungen versehene Schürze der Kapsel hindurchgeht;
g) die äußere Form und der Formungsdorn abgenommen werden;
wobei die Herstellung der Schwächungslinien, die das zerreißbare Umfangsband begrenzen, entweder während des Schritts c) oder nach dem Schritt g) durch Auszahnung einer Walze mit dem entsprechenden Profil erfolgt.

13. Herstellungsverfahren nach Anspruch 12, ergänzt durch den folgenden finalen Schritt: auf der Schürze Herstellung eines Schlitzes, typischerweise durch Stanzen, dessen Form mindestens einen im Wesentlichen axialen Teil, der durch die Breite des Bandes hindurchgeht, und mindestens einen Teil, der in Richtung einer der Schwächungslinien ausgerichtet ist, bildet.
